(19)

Europäisches
Patentamt
European
Patent Office
Office européen
des brevets

(11) **EP 4 498 616 A1**

(12) **EUROPEAN PATENT APPLICATION**

(43) Date of publication:
**29.01.2025 Bulletin 2025/05**

(21) Application number: **24190469.7**

(22) Date of filing: **23.07.2024**

(51) International Patent Classification (IPC):
**H04B 7/06** (2006.01)

(52) Cooperative Patent Classification (CPC):
**H04B 7/0695**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.07.2023 PCT/CN2023/109167
30.05.2024 CN 202410692131**

(71) Applicant: **MediaTek Singapore Pte. Ltd.
Singapore 138628 (SG)**

(72) Inventors:
• **ZHANG, Xiaonan
Beijing (CN)**

• **PENG, Yao
Beijing (CN)**
• **ZHANG, Yuanyuan
Beijing (CN)**
• **CHEN, Wei
Beijing (CN)**
• **WANG, Shiyue
Beijing (CN)**
• **CHEN, Xuying
Beijing (CN)**
• **AI, Bo
Beijing (CN)**

(74) Representative: **Pfenning, Meinig & Partner mbB
Patent- und Rechtsanwälte
Joachimsthaler Straße 10-12
10719 Berlin (DE)**

(54) **BEAM PREDICTION FOR MIMO WIRELESS COMMUNICATION SYSTEMS**

(57)    Apparatus and methods are provided for AI-based compressed sensing for beam prediction. In one novel aspect, the UE obtains one or more sensing matrices with matrices training and performs weighted beam measurements. In one embodiment, the UE performs beam sweeping to generate one or more measurement matrices, obtains one or more sensing matrices by compressing the one or more measurement matrices with matrices training, and performs weighted beam measurements to generate one or more weighted beam measurement matrices. In one embodiment, the matrices training is performed by the UE or by the wireless network using an AI model. In one embodiment, the UE performs measurement matrix reconstruction based on the one or more weighted beam measurement matrices and the one or more sensing matrices. In one embodiment, the UE predicts an optimal beam based on the one or more predicted weighted beam measurement matrices.

FIG. 2

## Description

TECHNICAL FIELD

The disclosed embodiments relate generally to wireless communication, and, more particularly, to artificial intelligence (AI)-based compressed sensing for beam prediction.

BACKGROUND

In conventional network of 3rd generation partnership project (3GPP) 5G new radio (NR), sub-6GHz and millimeter wave (mmWave) bands are widely used. The former is mainly used for the coverage of basic networks, while the latter is widely used in ultra-low delay and ultra-high bandwidth communication scenarios for its rich spectrum resources and short wavelength. However, mmWave signals are more susceptible to attenuation and absorption by obstacles such as buildings, trees, and even rain. They also have a shorter range and cannot penetrate solid objects as well as traditional wireless signals. With the rapid development of mobile applications, network efficiency needs improvement. In order to overcome the large path loss in mmWave communications, beamforming technology is introduced to enhance the signal strength and propagation ability.

In beam management, the optimal beam is selected by beam sweeping and beam measurement which can be jointly known as beam searching/training. The traditional beam searching method is exhaustive which introduces much beam training overhead. It is time-inefficient to measure the beam quality information one by one for all candidate beams in the beamforming codebook. The other hierarchical beam searching method can greatly save the training overhead by firstly searching among the wide beams and then searching the narrow beams within the angle range of the selected wide beam. The beam is selected according to a metric that partly reflects the beam quality. Further, accurate and efficient beam prediction is desired to further improve the efficiency of the system.

Improvements are required to compressed sensing measurement and prediction for the wireless network.

SUMMARY

Apparatus and methods are provided for AI-based compressed sensing for beam prediction. In one novel aspect, the UE obtains one or more sensing matrices with matrices training and performs weighted beam measurements. In one embodiment, the UE performs beam sweeping to generate one or more measurement matrices, obtains one or more sensing matrices based on the one or more measurement matrices by compressing the one or more measurement matrices with matrices training, wherein a sensing matrix is a network sensing matrix or a UE sensing matrix, and performs weighted beam measurements using the one or more sensing matrices to generate one or more weighted beam measurement matrices. In one embodiment, the one or more measurement matrices are reference signal received power (RSRP) matrices / RSRP images, and wherein the UE sweeps and measures all beams to generate the RSRP matrices/RSRP images. In one embodiment, the matrices training is performed by the UE using an artificial intelligence (AI) model. The UE indicates to the wireless network the network sensing matrix. In another embodiment, the matrices training is performed by the wireless network using an artificial intelligence (AI) model. The UE receives the UE sensing matrix from the wireless network. In one embodiment, the UE performs measurement matrix reconstruction based on the one or more weighted beam measurement matrices and the one or more sensing matrices. In one embodiment, the reconstruction is performed using an image reconstruction greedy algorithm or using a AI model. In one embodiment, the UE predicts an optimal beam based on the one or more predicted weighted beam measurement matrices. In one embodiment, the one or more predicted weighted beam measurement matrices are reconstructed to perform the prediction of the optimal beam.

This summary does not purport to define the invention. The invention is defined by the claims.

BRIEF DESCRIPTION OF THE DRAWINGS

The accompanying drawings, where like numerals indicate like components, illustrate embodiments of the invention.

Figure 1 is a schematic system diagram illustrating a multiple input multiple output (MIMO) wireless network with AI-based compressed sensing for beam prediction in accordance with embodiments of the current invention.

Figure 2 illustrates an exemplary inter-layer structure diagram of the proposed network that predicts the optimal beam with the sensing matrix as trainable parameters in accordance with embodiments of the current invention.

Figure 3 illustrates an exemplary overall flow for training stage in accordance with embodiments of the current invention.

Figure 4 illustrates an exemplary overall flow for predicting stage in accordance with embodiments of the current invention.

Figure 5 illustrates overall flow to perform optimal beams prediction on spatial domain by reconstructing compressed RSRP image in accordance with embodiments of the current invention.

Figure 6 illustrates an exemplary overall flow to perform optimal beams prediction on spatial and time domain by predicting and reconstructing compressed RSRP image in accordance with embodiments of the current invention.

Figure 7 illustrates an exemplary flow chart for the AI-based compressed sensing for beam prediction in accordance with embodiments of the current invention.

DETAILED DESCRIPTION

Reference will now be made in detail to some embodiments of the invention, examples of which are illustrated in the accompanying drawings.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system. Aspects of the present disclosure provide methods, apparatus, processing systems, and computer readable mediums for NR (new radio access technology, or 5G technology), 6G or other radio access technology. NR may support various wireless communication services. These services may have different quality of service (QoS) requirements e.g. latency and reliability requirement.

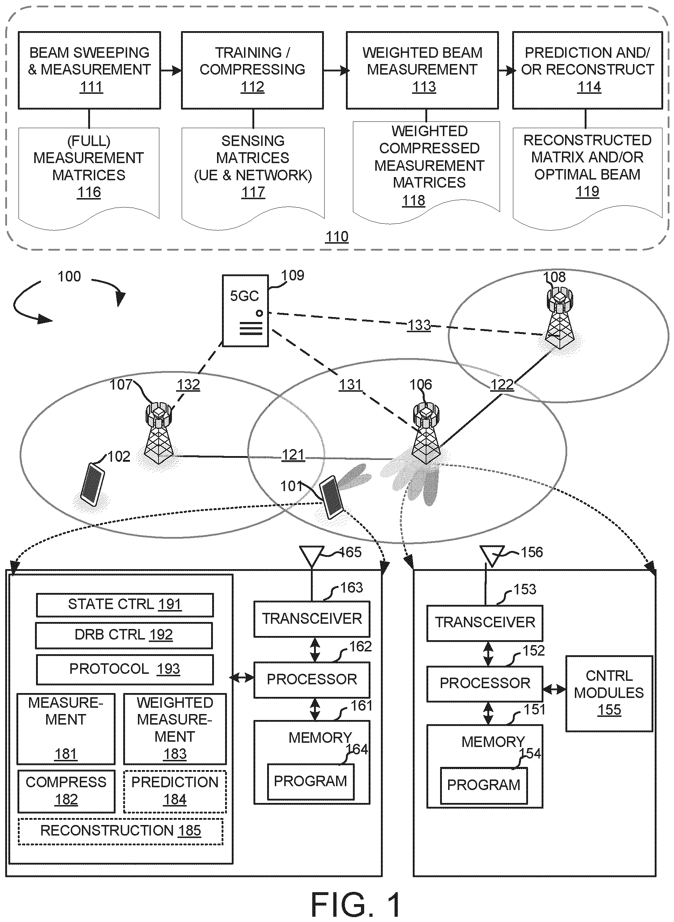

Figure 1 is a schematic system diagram illustrating a multiple input multiple output (MIMO) wireless network with AI-based compressed sensing for beam prediction in accordance with embodiments of the current invention. Wireless communication network 100 includes one or more fixed base infrastructure units forming a network distributed over a geographical region. The base unit may also be referred to as an access point, an access terminal, a base station, a Node-B, an eNode-B (eNB), a gNB, or by other terminology used in the art. As an example, base stations serve a number of mobile stations within a serving area, for example, a cell, or within a cell sector. In some systems, one or more base stations are coupled to a controller forming an access network that is coupled to one or more core networks. gNB 106, gNB 107 and gNB 108 are base stations in the wireless network, the serving area of which may or may not overlap with each other. As an example, user equipment (UE) 101 or mobile station 101 is in the serving area covered by gNB 106 and gNB 107. As an example, UE 102 or mobile station 102 is only in the service area of gNB 107 and connected with gNB 107. gNB 106 is connected with gNB 107 via Xn interface 121. gNB 106 is connected with gNB 108 via Xn interface 122. A 5G network entity 109 connects with gNB 106, 107, and 108 via NG connection 131, 132, and 133, respectively. In one embodiment, UE 101 is configured to be able to transmit data in INACTIVE without the transition to CONNECTED state.

In one novel aspect 110, AI-based compressed sensing for beam prediction is performed for MIMO wireless network 100. In one novel aspect, the UE, at the training stage, performs beam sweeping to obtain one or more measurement matrices for channel characteristic between UE and network, generates compressed measurement matrices and optimizes the sensing matrices for UE and network based on the one or more measurement matrices. After the training stage, at the prediction stage, the UE performs weighted beam measurement by deploying sensing matrices and obtains the compressed measurement matrix and reconstructs measurement matrix based on the compressed measurement matrix and deployed sensing matrices. In one embodiment, the optimal beam prediction is further performed based on the reconstructed RSRP image. At step 111, the UE performs beam sweeping and measurements. The beam sweeping generates one or more (full) measurement matrices 116. The (full) measurement matrix (matrices) 116 are measurement matrices of beam quality. The signal-to-noise ratio (SNR), reference signal received power (RSRP), and received signal strength (RSS) are often used to indicate the beam quality. In one embodiment, the full measurement matrix is an RSRP image. At step 112, the UE performs training-stage procedures, which performs training/compressing to generate one or more sensing matrices 117. A sensing matrix is a network sensing matrix $\Phi_1$ or a UE sensing matrix $\Phi_2$. In one embodiment, the number of sensing matrices is 1 or 2. At step 113, the UE performs weighted beam measurement and generates compressed measurement matrix (matrices) 118. In one embodiment, the compressed measurement matrix is a compressed RSRP image. At step 114, the UE performs matrix prediction to generate one or more predicting matrices and/or measurement matrix reconstruction. In one embodiment 119, the UE predicts a compressed measurement matrix (e.g., based on historical weighted beam measurement results) and/or the UE predicts a full measurement matrix (e.g., based on historical weighted beam measurement results). In one embodiment, the UE predicts an optimal beam based on the predicted matrix. In one embodiment, the predicted compressed measurement matrix is a compressed RSRP image. In yet another embodiment, the UE reconstructs the predicted compressed measurement matrix, such as a compressed RSRP image, to a full measurement matrix, such as a full RSRP image. In another embodiment, the UE reconstructs one or more compressed measurement matrices, such as compressed RSRP images, to corresponding one or more full measurement matrices, such as full RSRP images. The UE predicts an optimal beam based on the one or more reconstructed measurement matrices, such as full RSRP images.

Figure 1 further illustrates simplified block diagrams of a base station and a mobile device/UE that supports AI-based compressed sensing for beam prediction. Figure 1 includes simplified block diagrams of a UE, such as UE 101. The UE has an antenna 165, which transmits and receives radio signals. An RF transceiver circuit 163, coupled with the antenna, receives RF signals from antenna 165, converts them to baseband signals, and sends them to processor 162. RF transceiver 163 also converts received baseband signals from processor 162, converts them to RF signals, and sends out to antenna 165. Processor 162 processes the received baseband signals and invokes different functional modules to perform features in UE 101. Memory 161 stores program instructions and data 164 to control the operations of UE 101.

The UE also includes a set of control modules that carry out functional tasks. These control modules can be implemented by circuits, software, firmware, or a combination of them. A state control module 191 controls UE radio resource control (RRC) state according to network's command and UE conditions. RRC supports the following states, RRC IDLE, RRC_CONNECTED and RRCINACTIVE. DRB controller 192 controls to establish/add, reconfigure/modify and release/remove a DRB based on different sets of conditions for DRB establishment, reconfiguration, and release. Protocol stack controller 193 manages to add, modify, or remove the protocol stack for the DRB. The protocol stack includes SDAP, PDCP, RLC, MAC and PHY layers. In one embodiment, the SDAP layer supports the functions of transfer of data, mapping between a QoS flow and a DRB, marking QoS flow ID, reflective QoS flow to DRB mapping for the UL SDAP data PDUs, etc. The PDCP layer supports the functions of transfer of data, maintenance of PDCP SN, header compression and decompression using the ROHC protocol, ciphering and deciphering, integrity protection and integrity verification, timer based SDU discard, routing for split bearer, duplication, re-ordering, and in-order delivery; out of order delivery and duplication discarding. The RLC layer supports the functions of error correction through ARQ, segmentation and reassembly, re-segmentation, duplication detection, re-establishment, etc. In one embodiment, a new procedure for RLC reconfiguration is performed, which can reconfigure the RLC entity to be associated to one or two logical channels. The MAC layer supports the following functions: mapping between logical channels and transport channels, multiplexing/ demultiplexing, HARQ, radio resource selection, etc.

The control modules perform tasks to carry out AI-based compressed sensing for beam prediction. A measurement module 181 performs beam sweeping to generate full measurement matrices. A compress module 182 obtains one or more sensing matrices based on one or more generated full measurement matrices by performing matrices training to compress the full measurement matrices, wherein a sensing matrix is a network sensing matrix or a UE sensing matrix. A weighted measurement module 183 performs weighted beam measurements using the one or more sensing matrices to generate or more weighted beam measurement matrices. In one embodiment, the control modules further include a prediction module 184 that generates one or more predicting matrices by predicting corresponding predicting matrices based on the one or more weighted beam measurement matrices. In one embodiment, the control modules further include a reconstruction module 185 that performs measurement matrix reconstruction based on the one or more weighted beam measurement matrices and the one or more sensing matrices.

Figure 1 includes simplified block diagrams of a gNB, such as gNB 106. gNB 106 has an antenna 156, which transmits and receives radio signals. An RF transceiver circuit 153, coupled with the antenna, receives RF signals from antenna 156, converts them to baseband signals, and sends them to processor 152. RF transceiver 153 also converts received baseband signals from processor 152, converts them to RF signals, and sends out to antenna 156. Processor 152 processes the received baseband signals and invokes different functional modules to perform features in gNB 106. Memory 151 stores program instructions and data 154 to control the operations of gNB 106. gNB 106 also includes a set of control modules 155 that carry out functional tasks to communicate with mobile stations.

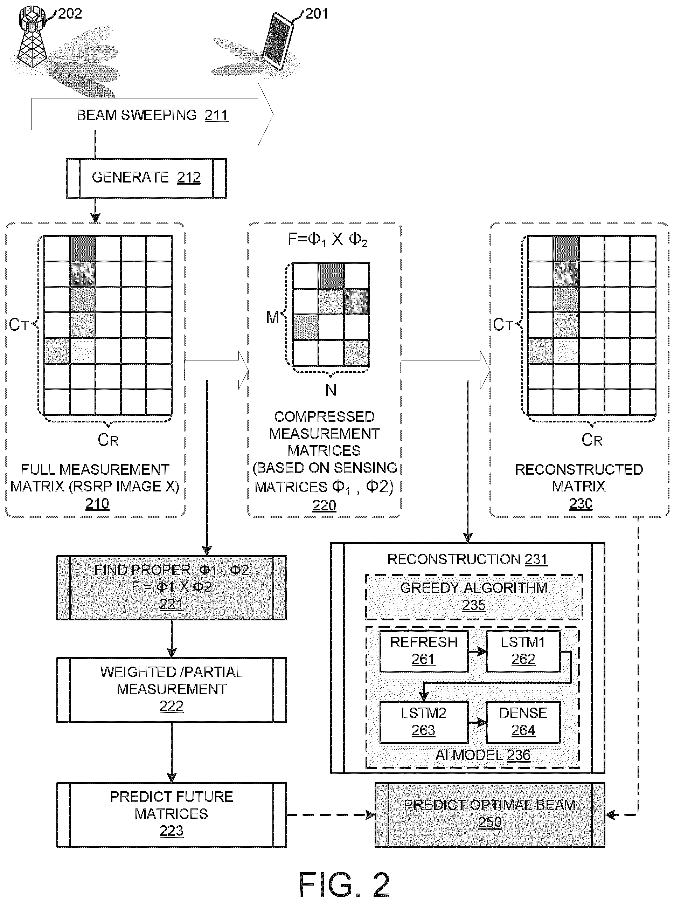

Figure 2 illustrates an exemplary inter-layer structure diagram of the proposed network that predicts the optimal beam with the sensing matrix as trainable parameters in accordance with embodiments of the current invention. UE 201 connects with gNB 202. At step 211, UE 201 performs beam sweeping. At step 212, UE 201 generates full measurement matrix 210 with dimension of $C_T$ by $C_R$. $C_T$ is the number of transmitters for the transmitted beams. $C_R$ is the number of receivers that receive beams. In one embodiment, the measurement matrix is an RSRP measurement matrix. The RSRP measurements of all beam pairs in the codebook (i.e. RSRP matrix) can be shown as an image. The RSRP matrix X 210, also referred to as an RSRP image X 210, is obtained through UE measurements and comprises $C_T \times C_R$ elements. Each element of the matrix represents the RSRP measured by a beam pair between the network and UE.

The sparsity of the full measurement matrix (RSRP image X) 210 reflected in the shade of the small grid can be well used. Suppose that $X \in \mathbb{R}^{\tilde{C}_T \times \tilde{C}_R}$ denotes the complete RSRP image X 210, at step 221, the UE obtains one or more sensing matrices to find the proper UE sensing matrix $\Phi_2$, and optionally, the network sensing matrix $\Phi_1$. Similar, the network obtains one or more sensing matrices to find the proper the network sensing matrix $\Phi_1$, and optionally, the UE sensing matrix $\Phi_2$. According to compressed sensing, we have F = $\Phi_1 X \Phi_2$. where $F \in \mathbb{R}^{M \times N}$ denotes the compressed measurement matrix 220 or compressed RSRP image 220, $\Phi_1 \in \mathbb{R}^{M \times \tilde{C}_T}$ and $\Phi_2 \in \mathbb{R}^{\tilde{C}_R \times N}$ are two measurement/sensing matrices. The above expression can be converted to vector form f = Φx, where f = $vec(F)$, x = $vec(\mathbf{X})$, $\Phi = \Phi_2^T \otimes \Phi_1$ is known as the equivalent sensing matrix. Multiplication of a sensing matrix $\Phi_1$ and $\Phi_2$ on both sides of the RSRP matrix results in a compressed RSRP image 220 (i.e., compressed RSRP matrix) F $(F = \Phi_1 X \Phi_2)$, which contains M×N elements. At step 222, the UE performs weighted / partial measurements. In one embodiment, at step 223, the UE predicts a future measurement matrix. In one embodiment, the predicted matrix is a compressed measurement matrix.

Due to the sparsity of the original RSRP image, the compressed RSRP image can contain maximal information from the original matrix under appropriate sensing matrix configurations. In one embodiment 231, the compressed measurement matrix / compressed RSRP image 220 reconstructed to original matrix 230 by certain methods. In one embodiment 235, the reconstruction algorithm is traditional greedy algorithm such as Orthogonal Matching Pursuit (OMP) or subspace pursuit (SP). In one embodiment 236, the reconstruction procedure is implemented by an AI model. In one embodiment, multiple long short-term memory (LSTM) layers are used for the AI model for reconstruction, including refresh 261, LSTM1 262, LSTM2 263, and dense 264.

In one embodiment, at step 223, one or more compressed measurement matrices / compressed RSRP images are used to predict a future matrix. Given the observed signal/compressed RSRP image and sensing matrix, the compression reconstruction algorithm can be applied to solve the following optimization problem:

$$min \quad \|x\|_1$$

$$s.t. \quad \|\Phi x - f\|_2^2 \leq \varepsilon$$

where the hyper-parameter $\varepsilon$ is determined by the error of the reconstruction algorithm. At step 250, the UE predicts the optimal beam based on the predicted compressed measurement matrix/compressed RSRP image, or the reconstructed full measurement matrix / reconstructed full RSRP image.

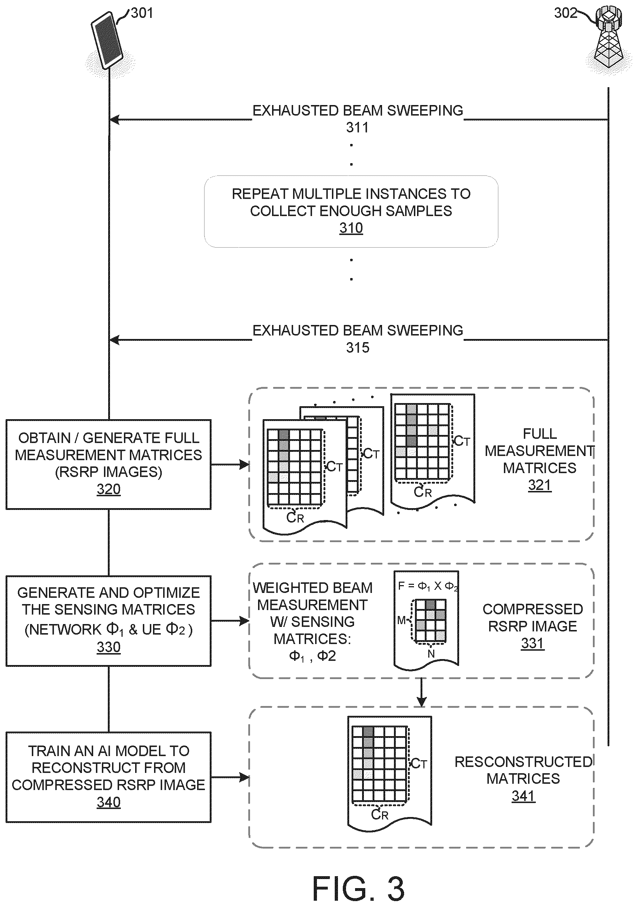

Figure 3 illustrates an exemplary overall flow for training stage in accordance with embodiments of the current invention. UE 301 connects with gNB 302 in the wireless network. To obtain detailed channel characteristics between UE and gNB, the UE performs full beam sweeping to generate an RSRP matrix X that contains all Tx/Rx beam pairs and their corresponding RSRP. In one embodiment 310, UE performs the full beam sweeping several times at different times to collect sufficient samples for model training and sensing matrices parameters tuning. At step 311, exhausted / full beam sweeping is performed. At step 315, repeated exhausted beam sweeping is performed. At step 320, the UE obtains / generates multiple (full) measurement matrices 321. In one embodiment, the one or more (full) measurement matrices are RSRP images. In one embodiment, at step 330, UE generates and optimizes the sensing matrix for network $\Phi_1$ and UE $\Phi_2$, and the compressed RSRP matrix (RSRP image) 331 can be derived as $\mathbf{F} = \Phi_1 \mathbf{X} \Phi_2$, wherein $\Phi_1$ is the network sensing matrix, and $\Phi_2$ is the UE sensing matrix. At step 340, UE uses a trained AI model to reconstruct from one or more compressed measurement matrices / compressed RSRP images to one or more reconstructed matrices / reconstructed RSRP images 341. In one embodiment, the principle for finding proper sensing matrices and AI model is to have the minimum error between the reconstructed matrix $\hat{X}$ (predicted from compressed RSRP matrix) and the original RSRP matrix X. In one embodiment, UE trains an AI model for reconstructing from compressed RSRP image F to RSRP image X. In one embodiment, UE informs the network sensing matrix $\Phi_1$ to network for deployment after training.

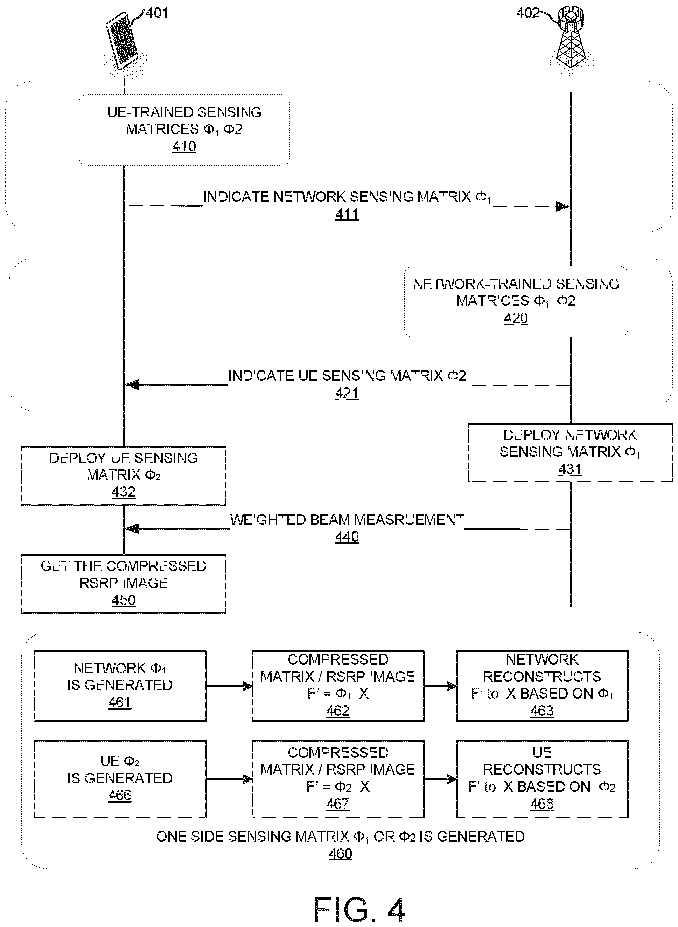

Figure 4 illustrates an exemplary overall flow for predicting stage in accordance with embodiments of the current invention. UE 401 connects with gNB 402. In one embodiment 410, UE do the training at training stage. At step 411, the UE 401 indicates the network sensing matrix $\Phi_1$ to the gNB for deployment. In one embodiment 420, UE 401 reports the measured RSRP matrix to network and network do the training to optimize the sensing matrices $\Phi_1$ and $\Phi_2$ for network and UE 401. In one embodiment, one or more sensing matrices are generated, such as network sensing matrix $\Phi_1$ and UE sensing matrix $\Phi_2$. Network sensing matrix $\Phi_1$ can be generated by the UE or by the wireless network. UE sensing matrix $\Phi_2$ is generated by the UE or by the wireless network. UE 401 reports multiple historical measured RSRP matrices to network to provide sufficient samples for model training and sensing matrices parameters tuning. The network trains an AI model for reconstructing from compressed RSRP image F to RSRP image X. In one embodiment, at step 421, network indicates the UE sensing matrix $\Phi_2$ to UE 401 for deployment after training.

At step 431, gNB 402 deploys the network sensing matrix $\Phi_1$. At step 432, UE 401 deploys the UE sensing matrix $\Phi_2$. In one embodiment, only network sensing matrix $\Phi_1$ is deployed. In another embodiment, only UE sensing matrix $\Phi_2$ is deployed. In yet another embodiment, both network sensing matrix $\Phi_1$ and UE sensing matrix $\Phi_2$ are deployed as in steps 431 and 432. In one embodiment, UE also deploys the well-trained AI model. During the predicting stage, UE 401 performs weighted beam measurement and obtains the compressed RSRP image F. In one embodiment, the weighted beam measurement is performed as a kind of digital precoding for beamforming by deploying sensing matrices. In one embodiment, at step 440, network transmits beamformed signals by controlling the weights of the power of different beams based on sensing matrix $\Phi_1$. In one embodiment, UE 401 receives multiple beams by digital precoding for beamforming to perform weighted beam measurement, the digital precoding for beamforming is controlled by the UE sensing matrix $\Phi_2$. In one embodiment, at step 450, UE 401 performs weighted beam measurement multiple times to collect enough samples for predicting compressed RSRP image in the future.

In one embodiment 460, network or UE generates and optimizes one side network sensing matrix $\Phi_1$ or UE sensing matrix $\Phi_2$. In one scenario, at step 461, network sensing matrix $\Phi_1$ is generated. At step 462, the compressed RSRP matrix (RSRP image) can be derived as F' = $\Phi_1 X$. In another scenario, at step 466, UE sensing matrix $\Phi_2$ is generated. At step 467, the compressed matrix (RSRP image) can be derived as F' = $X\Phi_2$. In one embodiment, the compressed RSRP image can be reconstructed to RSRP image by one side reconstruction by network or UE without signaling interaction between UE and network. In one embodiment, network or UE trains an AI model for reconstructing from compressed RSRP image F' to RSRP image X. As an example, at step 463, the network reconstructs F' to X based on network sensing matrix $\Phi_1$. In another scenario, at step 468, UE 401 reconstructs F' to X based on UE sensing matrix $\Phi_2$.

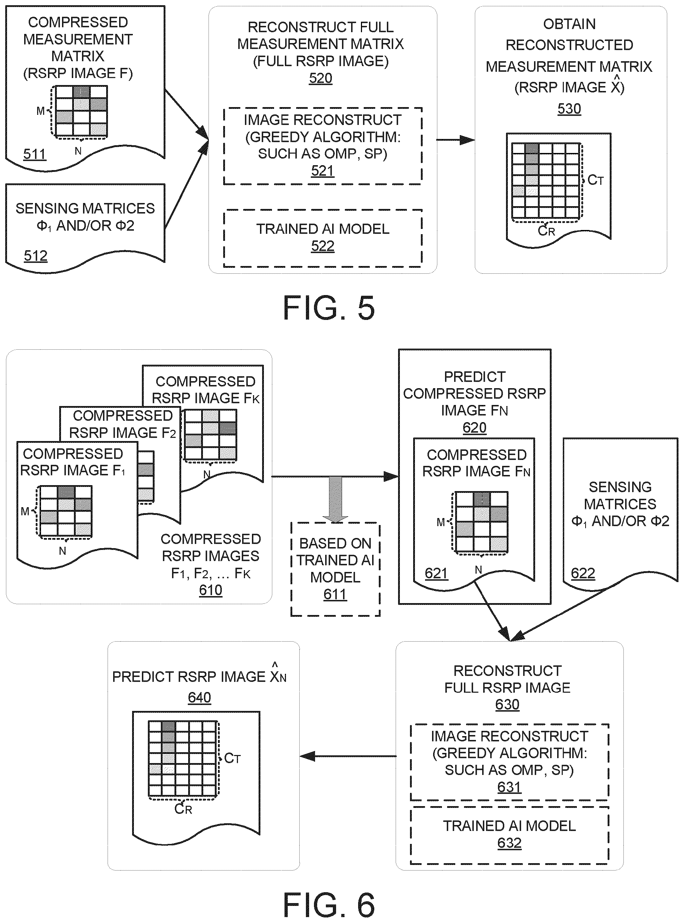

Figure 5 illustrates overall flow to perform optimal beams prediction on spatial domain by reconstructing compressed RSRP image in accordance with embodiments of the current invention. In one embodiment 520, the UE reconstructs the compressed RSRP image F 511 to original RSRP image $\hat{X}$ 530 based on configured sensing matrices 512 on UE and network. In one embodiment 521, the reconstruction algorithm is traditional greedy algorithm such as Orthogonal Matching Pursuit (OMP), subspace pursuit (SP), etc. In one embodiment 522, the reconstruction procedure is implemented by an AI model as trained in the training stage. The compressed RSRP image F is reconstructed to RSRP image $\hat{X}$ and UE further performs optimal beam prediction from the reconstructed RSRP image.

Figure 6 illustrates an exemplary overall flow to perform optimal beams prediction on spatial and time domain by predicting and reconstructing compressed RSRP image in accordance with embodiments of the current invention. In one embodiment 620, UE predicts the future compressed RSRP image $F_N$ 621 based on historical measured compressed RSRP images 610 (e.g., $F_1, F_2,... F_k$). In one embodiment 611, the prediction is implemented by an AI model. In one embodiment 630, the UE reconstructs the predicted compressed RSRP image $F_N$ to a predicted RSRP image $\hat{X}_N$ 640 based on the configured sensing matrices 622. In one embodiment, UE predicts and reconstructs the future RSRP image $\hat{X}_N$ directly based on historical measured compressed RSRP images (e.g., Fi, $F_2$, $F_3$...). In one embodiment, the prediction and reconstruction are implemented by an AI model. In one embodiment 631, the reconstruction algorithm is traditional greedy algorithm such as Orthogonal Matching Pursuit (OMP), subspace pursuit (SP), etc. In one embodiment 632, the reconstruction procedure is implemented by an AI model as trained in the training stage. UE further performs optimal beam prediction in the future from the reconstructed predicted RSRP image.

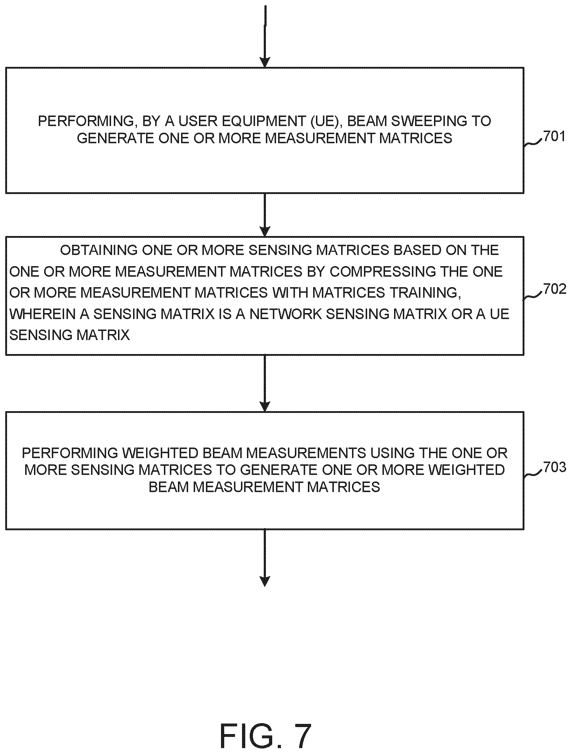

Figure 7 illustrates an exemplary flow chart for the AI-based compressed sensing for beam prediction in accordance with embodiments of the current invention. At step 701, the UE performs beam sweeping to generate full measurement matrices. At step 702, the UE obtains one or more sensing matrices based on the one or more measurement matrices by compressing the one or more measurement matrices with matrices training, wherein a sensing matrix is a network sensing matrix or a UE sensing matrix . At step 703, the UE performs weighted beam measurements using the one or more sensing matrices to generate one or more weighted beam measurement matrices.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method comprising:

    performing, by a user equipment (UE), beam sweeping to generate one or more measurement matrices;
    obtaining one or more sensing matrices based on the one or more measurement matrices by compressing the one or more measurement matrices with matrices training, wherein a sensing matrix is a network sensing matrix or a UE sensing matrix; and
    performing weighted beam measurements using the one or more sensing matrices to generate one or more weighted beam measurement matrices.

2. The method of claim 1, wherein the one or more measurement matrices are reference signal received power (RSRP) matrices, and wherein the UE sweeps and measures all beams to generate the RSRP matrices.

3. The method of any one of claims 1 or 2, wherein the matrices training is performed by the UE using an artificial intelligence (AI) model.

4. The method of claim 3, further comprising: indicating to a wireless network the network sensing matrix.

**5.** The method of any one of claims 1 to 4, wherein the matrices training is performed by a wireless network using an artificial intelligence (AI) model.

**6.** The method of claim 5, further comprising: receiving the UE sensing matrix from the wireless network.

**7.** The method of any one of claims 1 to 6, further comprising: performing measurement matrix reconstruction based on the one or more weighted beam measurement matrices and the one or more sensing matrices.

**8.** The method of claim 7, wherein the reconstruction is performed using an image reconstruction greedy algorithm or using a trained AI model.

**9.** The method of any one of claims 1 to 8, further comprising: generating one or more predicting matrices by predicting corresponding predicting matrices based on the one or more weighted beam measurement matrices.

**10.** The method of claim 9, further comprising: predicting an optimal beam based on the one or more predicting matrices.

**11.** The method of claim 10, wherein the one or more predicting matrices are reconstructed to perform the prediction of the optimal beam.

**12.** A user equipment (UE) comprising:

a radio frequency (RF) transceiver that transmits and receives radio signals;
a measurement module that performs beam sweeping to generate one or more measurement matrices ;
a compress module that obtains one or more sensing matrices based on the one or more measurement matrices by compressing the one or more measurement matrices with matrices training, wherein a sensing matrix is a network sensing matrix or a UE sensing matrix;
a weighted measurement module that performs weighted beam measurements using the one or more sensing matrices to generate one or more weighted beam measurement matrices.

**13.** The UE of claim 12, wherein the one or more measurement matrices are reference signal received power (RSRP) matrices, and wherein the UE sweeps and measures all beams to generate the RSRP matrices;
and/or wherein the matrices training is performed by the UE or by the wireless network using an artificial intelligence (AI) model,

wherein, for example, the matrices training is performed by the UE, and wherein the compress module further indicates to a wireless network the network sensing matrix,
and/or wherein, for example, the matrices training is performed by the wireless network, and wherein the compress module further receives the UE sensing matrix from the wireless network.

**14.** The UE of any one of claims 12 or 13, further comprising:
a reconstruction module that performs measurement matrix reconstruction based on the one or more weighted beam measurement matrices and the one or more sensing matrices.

**15.** The UE of any one of claims 12 to 14, further comprising a prediction module that generates one or more predicting matrices by predicting corresponding predicting matrices based on the one or more weighted beam measurement matrices;

and/or wherein the prediction module further predicts an optimal beam based on the one or more predicting matrices,
wherein, for example, the one or more predicted weighted beam measurement matrices are reconstructed to perform the prediction of the optimal beam.

FIG. 1

BEAM SWEEPING 211

GENERATE 212

$F = \Phi_1 \times \Phi_2$

$C_T$

$C_R$

FULL MEASUREMENT MATRIX (RSRP IMAGE X) 210

M

N

COMPRESSED MEASUREMENT MATRICES (BASED ON SENSING MATRICES $\Phi_1$, $\Phi2$) 220

$C_T$

$C_R$

RECONSTRUCTED MATRIX 230

FIND PROPER $\Phi1$, $\Phi2$
$F = \Phi1 \times \Phi2$
221

RECONSTRUCTION 231

GREEDY ALGORITHM 235

REFRESH 261

LSTM1 262

LSTM2 263

DENSE 264

AI MODEL 236

WEIGHTED /PARTIAL MEASUREMENT 222

PREDICT FUTURE MATRICES 223

PREDICT OPTIMAL BEAM 250

FIG. 2

/301

302

EXHAUSTED BEAM SWEEPING
311

.

.

REPEAT MULTIPLE INSTANCES TO
COLLECT ENOUGH SAMPLES
310

.

.

EXHAUSTED BEAM SWEEPING
315

OBTAIN / GENERATE FULL
MEASUREMENT MATRICES
(RSRP IMAGES)
320

$C_T$
$C_T$
$C_T$
$C_R$
$C_R$
FULL MEASUREMENT
MATRICES
321

GENERATE AND OPTIMIZE
THE SENSING MATRICES
(NETWORK $\Phi_1$ & UE $\Phi_2$)
330

WEIGHTED BEAM
MEASUREMENT
W/ SENSING
MATRICES:
$\Phi_1$, $\Phi2$

$F = \Phi_1 \times \Phi_2$
M
N

COMPRESSED
RSRP IMAGE
331

TRAIN AN AI MODEL TO
RECONSTRUCT FROM
COMPRESSED RSRP IMAGE
340

$C_T$
$C_R$
RESCONSTRUCTED
MATRICES
341

FIG. 3

UE-TRAINED SENSING
MATRICES $\Phi_1$ $\Phi2$
410

INDICATE NETWORK SENSING MATRIX $\Phi_1$
411

NETWORK-TRAINED SENSING
MATRICES $\Phi_1$ $\Phi2$
420

INDICATE UE SENSING MATRIX $\Phi2$
421

DEPLOY UE SENSING
MATRIX $\Phi_2$
432

DEPLOY NETWORK
SENSING MATRIX $\Phi_1$
431

WEIGHTED BEAM MEASRUEMENT
440

GET THE COMPRESSED
RSRP IMAGE
450

NETWORK $\Phi_1$
IS GENERATED
461

COMPRESSED
MATRIX / RSRP IMAGE
F' = $\Phi_1$ X
462

NETWORK
RECONSTRUCTS
F' to X BASED ON $\Phi_1$
463

UE $\Phi_2$
IS GENERATED
466

COMPRESSED
MATRIX / RSRP IMAGE
F' = $\Phi_2$ X
467

UE
RECONSTRUCTS
F' to X BASED ON $\Phi_2$
468

ONE SIDE SENSING MATRIX $\Phi_1$ OR $\Phi2$ IS GENERATED
460

# FIG. 4

COMPRESSED
MEASUREMENT
MATRIX
(RSRP IMAGE F)

M

511    N

SENSING MATRICES
Φ₁ AND/OR Φ2

512

RECONSTRUCT FULL
MEASUREMENT MATRIX
(FULL RSRP IMAGE)
520

IMAGE RECONSTRUCT
(GREEDY ALGORITHM:
SUCH AS OMP, SP)
521

TRAINED AI MODEL
522

OBTAIN
RECONSTRUCTED
MEASUREMENT MATRIX
(RSRP IMAGE $\hat{X}$)
530

$C_T$

$C_R$

## FIG. 5

COMPRESSED
RSRP IMAGE F$_K$

COMPRESSED
RSRP IMAGE F₂

COMPRESSED
RSRP IMAGE F₁

M

N

COMPRESSED
RSRP IMAGES
F₁, F₂, ... F$_K$
610

BASED ON
TRAINED AI
MODEL
611

PREDICT
COMPRESSED RSRP
IMAGE F$_N$
620

COMPRESSED
RSRP IMAGE F$_N$

M

621    N

SENSING
MATRICES
Φ₁ AND/OR Φ2

622

PREDICT RSRP IMAGE $\hat{X}_N$
640

$C_T$

$C_R$

RECONSTRUCT
FULL RSRP IMAGE
630

IMAGE RECONSTRUCT
(GREEDY ALGORITHM:
SUCH AS OMP, SP)
631

TRAINED AI MODEL
632

## FIG. 6

PERFORMING, BY A USER EQUIPMENT (UE), BEAM SWEEPING TO GENERATE ONE OR MORE MEASUREMENT MATRICES ⟋701

OBTAINING ONE OR MORE SENSING MATRICES BASED ON THE ONE OR MORE MEASUREMENT MATRICES BY COMPRESSING THE ONE OR MORE MEASUREMENT MATRICES WITH MATRICES TRAINING, WHEREIN A SENSING MATRIX IS A NETWORK SENSING MATRIX OR A UE SENSING MATRIX ⟋702

PERFORMING WEIGHTED BEAM MEASUREMENTS USING THE ONE OR MORE SENSING MATRICES TO GENERATE ONE OR MORE WEIGHTED BEAM MEASUREMENT MATRICES ⟋703

# FIG. 7

Europäisches
Patentamt

European
Patent Office

Office européen
des brevets

# EUROPEAN SEARCH REPORT

Application Number

EP 24 19 0469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIAN YONGQING ET AL: "Beam Sweeping Assisted Compressive Channel Estimation for Wideband mmWave Massive MIMO Systems with Hybrid Beamforming", 2022 IEEE/CIC INTERNATIONAL CONFERENCE ON COMMUNICATIONS IN CHINA (ICCC), IEEE, 11 August 2022 (2022-08-11), pages 1026-1031, XP034191786, DOI: 10.1109/ICCC55456.2022.9880709 [retrieved on 2022-09-22] * Section III.B; page 1027 - page 1029 * ----- | 1-15 | INV. H04B7/06 |
| A | WANG YUYANG ET AL: "Site-Specific Online Compressive Beam Codebook Learning in mmWave Vehicular Communication", IEEE TRANSACTIONS ON WIRELESS COMMUNICATIONS, IEEE SERVICE CENTER, PISCATAWAY, NJ, US, vol. 20, no. 5, 8 January 2021 (2021-01-08), pages 3122-3136, XP011853238, ISSN: 1536-1276, DOI: 10.1109/TWC.2020.3047547 [retrieved on 2021-05-07] * section IV; page 3127 - page 3128 * ----- | 1-15 | |

**TECHNICAL FIELDS SEARCHED (IPC)**

H04B

The present search report has been drawn up for all claims

| Place of search | Date of completion of the search | Examiner |
|---|---|---|
| Munich | 6 December 2024 | Sälzer, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)